## Europäisches Patentamt

(19) **European Patent Office**

**Office européen des brevets**

(11) Publication number:  **0 060 210**
**B1**

(12) **EUROPEAN PATENT SPECIFICATION**

(45) Date of publication of patent specification: **13.02.85**

(51) Int. Cl.⁴: **B 60 C 9/20**

(21) Application number: **82630014.7**

(22) Date of filing: **26.02.82**

(54) Tire with a reinforcing belt structure.

<table>
<tr><td>

(30) Priority: **04.03.81 US 240530**

(43) Date of publication of application:
**15.09.82 Bulletin 82/37**

(45) Publication of the grant of the patent:
**13.02.85 Bulletin 85/07**

(84) Designated Contracting States:
**DE FR GB**

(56) References cited:
**DE-A-1 680 457**
**DE-A-2 154 186**
**FR-A-2 178 802**
**FR-A-2 291 050**

</td><td>

(73) Proprietor: **THE GOODYEAR TIRE & RUBBER COMPANY**
**1144 East Market Street**
**Akron, Ohio 44316 (US)**

(72) Inventor: **Declercq, Pierre Joseph Raoul**
**14, RUe de la Cabine**
**B-6718 Hachy (BE)**

(74) Representative: **Weyland, Joseph Jean Pierre**
**Goodyear International Tire Technical Center**
**Patent Department Avenue Gordon Smith**
**L-7750 Colmar-Berg (LU)**

</td></tr>
</table>

Courier Press, Leamington Spa, England.

## Description

The present invention relates to a tire with a reinforcing belt structure comprising a first folded belt ply and a second folded belt ply, the second folded belt ply being disposed radially outwardly with respect to the axis of rotation of the tire of the first folded belt ply whereby the cords of the first folded belt ply have a lower elasticity modulus than the cords of the second folded belt ply, the first folded belt ply comprising a main body portion which extends substantially over the whole of the tread width and a radially outwardly folded portion which extends over less than half the tread width, the second folded belt ply comprising a main body portion which extends substantially over the whole of the tread width and a folded portion which extends over less than half the tread width whereby the folds of the two folded belt plies are on opposite sides with respect to the mid-circumferential plane and whereby the unfolded end of the main body portion of the second folded belt ply lies within the bight formed by the fold of the first folded ply.

Such a belt structure is for example known from FR—A—2178802. This patent discloses various belt structures with geometrical configurations which are symmetrical or asymmetrical with respect to the mid-circumferential plane of the tire. However, all the belt structures illustrated in this patent are substantially symmetrical with respect to the mid center plane in terms of the rigidity and the stiffness of the belt.

The object of the present invention is to provide a tire with an asymmetrical belt structure which is both asymmetrical in terms of geometry and in terms of rigidity and stiffness.

It is well known, that a certain asymmetry in the rigidity and the stiffness of the belt structure of a radial carcass tire can influence very favourably the riding behaviour of a tire.

This is particularly the case for cars with an independent wheel suspension whereby the tires run under a certain camber angle. Different conditions of load result in a change of camber angle. The riding comfort of these cars is considerably improved when the change of camber angle is accompanied by a change of the cornering force. This force can be for example generated by an asymmetrical belt structure of the tire.

An asymmetrically belted tire can also be mounted with advantage on a car which does not run under camber. The asymmetrical properties of the tire generate a cornering force which introduces an artificial camber effect on the tire, thereby increasing the stability of the car and producing all the benefits over the camber effect when cornering and when driving at high speeds.

The object of the present invention is to provide a tire which can run at high speed and which at the same time gives good riding comfort. This is achieved by the means recited in the characterization portion of claim 1.

The invention will now be further described by the annexed drawings which only represent a preferred embodiment of the invention.

### Description of the Drawings

Figure 1 is a cross-sectional view of a pneumatic tire embodying a belt reinforcing structure made in accordance with the present invention; and

Figure 2 is a fragmentary plan view of the belt structure of Figure 1 in which some parts are broken away to show the direction of the ply cords.

### Detailed Description of the Invention

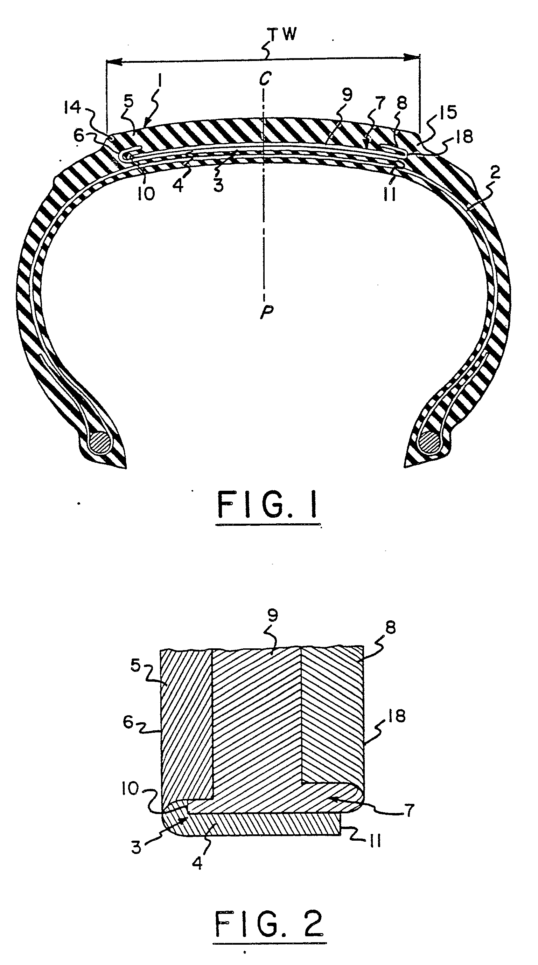

Referring to Figure 1, there is illustrated a pneumatic tire 1 which comprises a carcass, preferably of the radial type wherein the cords 2 of the carcass lie at an angle in the range of 70° to 90° with respect to the mid-circumferential centerplane of the tire 1. In the particular embodiment illustrated, the carcass is illustrated as comprising one ply, however, the carcass may have any desired number of plies. Over the radially outer peripheral region of the carcass is placed a belt structure comprising a first folded ply 3, which extends circumferentially about the tire. Folded ply 3 comprises a main body portion 4 and a folded end portion 5 which is folded radially outwardly of the main body portion 4 forming bight 6. The width of the folded end portion 5 lies in the range of 1/5 to 1/3 of the width of the main body portion 4. The ply 3, and the ply 7 to be later described, each comprise a plurality of reinforcing cords with the cords of each of the plies extending parallel to each other and at an angle to the mid-circumferential plane CP of the tire. The cords of ply 3 lie at an angle between 15° and 25° with respect to the mid-circumferential plane CP of the tire. The main body portion 4 of belt ply 3 extends substantially across the width of the ground engaging tread portion of the tire, generally terminating in shoulder regions 14 and 15.

The belt structure further comprises a ply 7 which is disposed radially outwardly of the axis of rotation of the tire with respect to ply 3. The ply 7 has one end 8 folded radially outwardly back upon the main body portion 9 of ply 7. The width of the folded end portion 8 lies in the range of 1/5 to 1/3 of the width of the main body portion 9. The width of the main body portion 8 is substantially equal to the width of ply 3. The folded end portion 8 of ply 7 is situated in the shoulder 15 axially opposite to shoulder 14 in which the folded end portion 5 of ply 3 is situated. The lateral edge 10 of the main body portion 9 of ply 7 extends into bight 6. The axially outer edge 18 of folded end portion 8 of ply 7 extends axially outwardly beyond the edge 11 of the main body portion 4 of ply 3 a distance of approximately 5 mm.

The cords of ply 7 lie at an angle of between 15° and 25° to the mid-circumferential centerplane CP of the tire.

Referring to figure 2, there is shown a plan view of the belt structure of the invention illustrating the relative angles of orientation of the different cords with respect to the mid-circumferential centerplane CP. Figure 2 illustrates quite clearly that the cords of the main body portion 4 of ply 3, and main body portion 9 of ply 7 run in opposite directions.

The width of the folded end portions 5, 8 of the plies 3, 7 lies in the range of 1/5 to 1/3 of the width· of the unfolded end portion. Tests have shown that end portions, smaller than 1/5 will not give the belt edge the necessary strength to resist belt separation during high speed operation. On the other hand the upper limit of 1/3 is imposed by the necessity of having shoulder areas which are reinforced with respect to the centre area of the tread.

For a good working of the invention it is essential that the cords of the ply closest to the carcass have a lower elasticity modulus than the cord ply which is disposed radially outward thereof. In this way a relatively smooth gradient of stiffness is achieved in the crown region of the tire. Accordingly, the cords of ply 3 have a lower elasticity modulus than the cords of ply 7.

The elasticity modulus of the cords of ply 7 preferably lie in the range of $10 \times 10^{10}$ N/m² and $17 \times 10^{10}$ N/m² and the elasticity modulus of the cords of ply 3 preferably lies in the range of $3 \times 10^{10}$ N/m² and $7 \times 10^{10}$ N/m². The ratio of the higher to the lower elasticity modulus preferably lies in the range of 1.5 to 4, and in the particular embodiment illustrated is 3.

In a preferred embodiment ply 3 with the lower elasticity modulus comprises cords made out of a non-metallic fibre, whereas ply 7 with the higher elasticity modulus comprises steel cords. The following materials are examples of high modulus non-metallic fibres which could be used in the manufacture of cords: aramid, fiberglass, carbon, silicon and boron. The present invention, however, is not limited to the use of these materials.

As an alternative, relatively fine steel cords can be used for the ply with the lower elasticity modulus and relatively coarse steel cords for the ply with the higher elasticity modulus.

## Claims

1. A tire (1) with a reinforcing belt structure comprising a first folded belt ply (3) and a second folded belt ply (7), the second folded belt ply (7) being disposed radially outwardly with respect to the axis of rotation of the tire (1) of the first folded belt ply (3) whereby the cords of the first folded belt ply (3) have a lower elasticity modulus than the cords of the second folded belt ply (7), the first folded belt ply (3) comprising a main body portion (4) which extends substantially over the whole of the tread width and a radially outwardly folded portion (5) which extends over less than half the tread width, the second folded belt ply (7) comprising a main body portion (9) which extends substantially over the whole of the tread width and a folded portion (8) which extends over less than half the tread width whereby the folds (5, 8) of the two folded belt plies (3, 7) are on opposite sides with respect to the mid-circumferential plane (CP) and whereby the unfolded end (10) of the main body portion (9) of the second folded belt ply (7) lies within the bight (6) formed by the fold of the first folded ply (3) characterized in that the folded portion (8) of the second folded belt ply (7) is folded radially outwardly and that the cords of the second folded belt ply (7) have an elasticity modulus which lies in the range of $10 \times 10^{10}$ N/m² to $17 \times 10^{10}$ N/m² and that the cords of the first folded belt ply (3) have an elasticity modulus which lies in the range of $3 \times 10^{10}$ N/m² to $7 \times 10^{10}$ N/m².

2. A tire (1) according to claim 1 characterized in that the ratio of the elasticity moduli of the cords of the second folded belt ply (3) to the cords of the first folded belt ply (7) lie in the range of 1.5 to 4.

3. A tire (1) according to claim 1 characterized in that the cords of the first folded belt ply (3) are made out of non-metallic fibers and that the cords of the second folded belt ply (7) are made out of steel.

4. A tire (1) according to claim 1 characterized in that the cords of the first folded belt ply (3) are made out of a relatively fine steel cord and that the cords of the second folded belt ply (7) are made out of a relatively coarse steel cord.

5. A tire (1) according to any of claims 1 to 4 characterized in that the width of the folded portions (5, 8) of the first and second folded belt plies (3, 7) lie within 1/5 and 1/3 of the width respectively of the main body portion (4, 9) of the folded belt plies (3, 7).

6. A tire (1) according to any of the preceding claims characterized by a substantially radial reinforcing carcass structure.

## Revendications

1. Bandage pneumatique (1) pourvu d'une ceinture de renforcement comprenant une première nappe de ceinture repliée (3) et une seconde nappe de ceinture repliée (7), celle-ci étant disposée radialement vers l'extérieur de la première nappe de ceinture repliée (3) par rapport à l'axe de rotation du bandage pneumatique (1), de telle sorte que les câblés de la première nappe de ceinture repliée (3) aient un module d'élasticité inférieur à celui des câbles de la seconde nappe de ceinture repliée (7), la première nappe de ceinture repliée (3) comprenant un corps principal (4) qui s'étend pratiquement sur toute la largeur de la bande de roulement, ainsi qu'une partie repliée radialement vers l'extérieur (5) qui s'étend sur moins de la moitié de la largeur de la bande de roulement, tandis que la seconde nappe de ceinture repliée (7) comprend un corps principal (9) qui s'étend pratiquement sur toute la largeur de la bande de roulement, ainsi qu'une partie repliée (8) qui s'étend sur moins de la moitié de la largeur de la bande de roulement, de telle sorte que les plis (5, 8) des deux nappes de ceinture repliées (3, 7) soient situés sur des côtés opposés par rapport au plan circonférentiel médian (CP) et que l'extrémité non repliée (10) du corps principal (9) de la seconde nappe de ceinture repliée (7) soit située à l'intérieur de l'anse (6) formée par le pli de la première nappe repliée (3), caractérisé en ce que la partie repliée (8) de la seconde nappe de ceinture repliée (7) est repliée radialement vers l'extérieur, les câblés de la seconde nappe de ceinture repliée (7) ayant un module d'élasticité se situant dans l'intervalle de $10 \times 10^{10}$ N/m² à $17 \times 10^{10}$ N/m², tandis que les câblés de la première nappe de ceinture repliée (3) ont un module d'élasticité se situant dans l'intervalle de $3 \times 10^{10}$ N/m² à $7 \times 10^{10}$ N/m².

2. Bandage pneumatique (1) suivant la revendication 1, caractérisé en ce que le rapport entre les modules d'élasticité des câblés de la seconde nappe de ceinture repliée (7) et des câblés de la première nappe de ceinture repliée (3) se situe dans l'intervalle de 1,5 à 4.

3. Bandage pneumatique (1) suivant la revendication 1, caractérisé en ce que les câblés de la première nappe de ceinture repliée (3) sont constitués de fibres non métalliques, tandis que les câbles de la seconde nappe de ceinture repliée (7) sont constitués d'acier.

4. Bandage pneumatique (1) suivant la revendication 1, caractérisé en ce que les câblés de la première nappe de ceinture repliée (3) sont de câblés d'acier relativement fins, tandis que les câblés de la seconde nappe de ceinture repliée (7) sont des câblés d'acier relativement gros.

5. Bandage pneumatique (1) suivant l'une quelconque des revendications 1 à 4, caractérisé en ce que la largeur des parties repliées (5, 8) des première et seconde nappes de ceinture repliées (3, 7) se situe dans l'intervalle de 1/5 à 1/3 de la largeur respectivement du corps principal (4, 9) des nappes de ceinture repliées (3, 7).

6. Bandage pneumatique (1) suivant l'une quelconque des revendications précédentes, caractérisé par une structure de carcasse de renforcement pratiquement radiale.

**Patentansprüche**

1. Reifen (1) mit einem verstärkenden Gürtelaufbau, bestehend aus einer ersten gefalteten Gürtellage (3) und einer zweiten gefalteten Gürtellage (7), wobei die zweite gefaltete Gürtellage (7) radial außerhalb in Bezug zur Drehachse des Reifens (1) von der ersten gefalteten Gürtellage (3) angeordnet ist, wobei die Korde der ersten gefalteten Gürtellage (3) ein geringeres Elastizitätsmodul als die Korde der zweiten gefalteten Gürtellage (7) aufweisen, wobei die erste gefaltete Gürtellage (3) einen Hauptkörperbereich (4) aufweist, welcher sich im wesentlichen über die gesamte Breite der Lauffläche erstreckt, und einen radial nach außen gefalteten Bereich (5), welcher sich über weniger als die Hälfte der Laufflächenbreite erstreckt, wobei die zweite gefaltete Gürtellage (7) einen Hauptkörperbereich (9) aufweist, welcher sich im wesentlichen über die gesamte Breite der Lauffläche erstreckt, und einen gefalteten Bereich (8), welcher sich über weniger als die Hälfte der Laufflächenbreite erstreckt, wobei die Umfaltungen (5, 8) der beiden gefalteten Gürtellagen (3, 7) an gegenüberliegenden Seiten hinsichtlich der mittleren Umfangsebene (CP) liegen und wobei das ungefaltete Ende (10) des Hauptkörperbereichs (9) der zweiten gefalteten Gürtellage (7) innerhalb der Einbuchtung (6) liegen, welche von der Umfaltung der ersten gefalteten Lage (3) gebildet wird, dadurch gekennzeichnet, daß der gefaltete Bereich (8) der zweiten gefalteten Gürtellage (7) radial nach außen gefaltet ist, daß die Korde der zweiten gefalteten Gürtellage (7) einen Elastizitätsmodul aufweisen, welcher im Bereich von $10 \times 10^{10}$ N/m² bis $17 \times 10^{10}$ N/m² liegt, und daß die Korde der ersten gefalteten Gürtellage (3) einen Elastizitätsmodul aufweisen, welcher im Bereich von $3 \times 10^{10}$ N/m² bis $7 \times 10^{10}$ N/m² liegt.

2. Reifen (1) nach Anspruch 1, dadurch gekennzeichnet, daß das Verhältnis des Elastizitätsmoduls der Korde der zweiten gefalteten Gürtellage (7) zu dem der Korde der ersten gefalteten Gürtellage (3) im Bereich von 1,5 bis 4 liegt.

3. Reifen (1) nach Anspruch 1, dadurch gekennzeichnet, daß die Korde der ersten gefalteten Gürtellage (3) aus nicht-metallischen Fasern und die Korde der zweiten gefalteten Gürtellage (7) aus Stahl bestehen.

4. Reifen (1) nach Anspruch 1, dadurch gekennzeichnet, daß die Korde der ersten gefalteten Gürtellage (3) aus einem relativ feinen Stahlkord und die Korde der zweiten gefalteten Gürtellage (7) aus einem relativ groben Stahlkord bestehen.

5. Reifen (1) nach einem der Ansprüche 1 bis 4, dadurch gekennzeichnet, daß die Breiten der gefalteten Bereiche (5, 8) der ersten und der zweiten gefalteten Gürtellage (3, 7) innerhalb 1/5 bis 1/3 der Breite jeweils der Hauptkörperbereiche (4, 9) der gefalteten Gürtellagen (3, 7) liegen.

6. Reifen (1) nach einem der vorhergehenden Ansprüche, gekennzeichnet durch einen im wesentlichen radial verstärkenden Karkassenaufbau.

## FIG. 1

## FIG. 2